# FASCICULE DE BREVET EUROPEEN

(11) **EP 4 180 325 B1**
(45) Date de publication et mention de la délivrance du brevet: **24.01.2024**
(21) Numéro de dépôt: 22205320.9
(22) Date de dépôt: 03.11.2022
(51) Int. Cl.: B64C 25/04

(54) **ENSEMBLE STRUCTUREL POUR UN AÉRONEF**
STRUKTURANORDNUNG FÜR EIN FLUGZEUG
STRUCTURAL ASSEMBLY FOR AN AIRCRAFT

(30) Priorité: 10.11.2021 FR 2111955
(43) Date de publication de la demande: 17.05.2023
(73) Titulaire: Airbus Operations (S.A.S.), 31060 Toulouse Cedex 9 (FR)
(72) Inventeur: ORTEU, Benoit, 31060 TOULOUSE (FR); MIL, Ludovic, 31060 TOULOUSE (FR); LAGANIER, Lionel, 31060 TOULOUSE (FR); MARTY, Dominique, 31060 TOULOUSE (FR); ROBERT, Philippe, 31060 TOULOUSE (FR)
(74) Mandataire: Airbus-OPS SAS

(56) Documents cités:
- WO-A1-2006/051235
- US-A1- 2010 230 535
- US-A1- 2016 185 451
- US-A1- 2019 112 035

## Description

### DOMAINE TECHNIQUE

La présente invention se rapporte au domaine des aéronefs, en particulier, à un ensemble structurel d'un aéronef. La présente invention concerne ainsi un aéronef comportant un tel ensemble structurel.

### ÉTAT DE LA TECHNIQUE ANTÉRIEURE

Un aéronef comporte classiquement un fuselage qui présente une structure sur laquelle est fixée une peau qui assure, entre autres, l'étanchéité de la cabine logée dans le fuselage par rapport à l'extérieur.

L'aéronef comporte également des trains d'atterrissage qui peuvent être escamotés dans le fuselage lorsque l'aéronef est en vol. Afin de loger un train d'atterrissage, l'aéronef comporte un compartiment qui est délimité à l'intérieur du fuselage et qui présente des parois formant une barrière étanche. Ce compartiment présente une ouverture avec l'extérieur pour permettre le passage du train d'atterrissage et une porte qui se ferme pour obturer l'ouverture lorsque le train d'atterrissage est escamoté (voir, par exemple, le document US 2016/185451 A1).

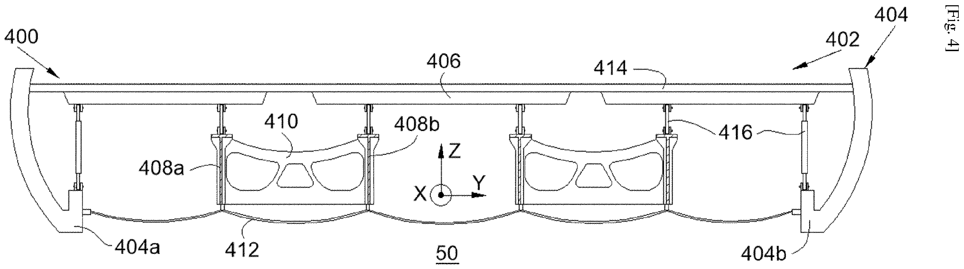

La Fig. 4 montre une coupe d'un aéronef 400 de l'état de la technique par un plan perpendiculaire à la direction longitudinale X dudit aéronef 400. La Fig. 4 montre un ensemble structurel 402 qui comporte ici une pluralité de portiques principaux 404a-b qui sont distribués et fixés ensemble selon la direction longitudinale de l'ensemble structurel 402 et deux panneaux transversaux (non représentés) à l'avant et à l'arrière des portiques principaux 404a-b et qui délimitent ensemble le compartiment 50 pour le train d'atterrissage. Les portiques principaux 404a-b s'intègrent à la structure 404 de l'aéronef 400 sur laquelle la peau se fixe. Chaque portique principal 404a-b prend la forme d'un arceau.

L'ensemble structurel 402 comporte également des paires de portiques secondaires 408a-b qui s'étendent parallèlement à la direction longitudinale X entre les portiques principaux 404a-b et qui se fixent par leurs extrémités aux panneaux transversaux.

Entre chaque paire de portiques secondaires 408a-b est fixée une pluralité de parois transversales 410. Les parois transversales 410 sont réparties le long de la direction longitudinale X.

Des membranes 412 sont fixées entre les portiques principaux 404a-b et les panneaux transversaux. Ces membranes 412 constituent le plafond du compartiment 50 et elles forment une barrière étanche entre le compartiment 50 et le reste de l'aéronef 400. Les membranes 412 s'étendent sous les portiques secondaires 408a-b et les parois transversales 410 et elles sont fixées en partie basse des portiques secondaires 408a-b.

Sur la largeur de l'aéronef 400, l'ensemble structurel 402 comporte également une pluralité de traverses 406, ici au nombre de trois qui s'étendent transversalement par rapport à la direction longitudinale X, c'est-à-dire parallèlement aux panneaux transversaux. Il y a une pluralité de ces trois traverses 406 réparties le long de la direction longitudinale X.

Sur ces traverses 406 sont fixés un plancher 414 et les rails de fixation des sièges passagers. Le plancher 414 est également fixé aux portiques principaux 404a-b.

Les traverses 406 sont disposées au-dessus des portiques secondaires 408a-b et chaque traverse 406 est disposée à cheval entre deux portiques secondaires 408a-b de paires différentes ou entre un portique secondaire 408a-b et un portique principal 404a-b.

Chaque traverse 406 est reliée aux deux portiques secondaires 408a-b ou au portique secondaire 408a-b et au portique principal 404a-b par deux bielles 416 et chaque bielle 416 est montée libre en rotation par une première extrémité à une partie inférieure de la traverse 406 et par sa deuxième extrémité à une partie supérieure du portique secondaire 408a-b ou du portique principal 404a-b.

Chaque rotation s'effectue autour d'un axe de rotation transversal par rapport à la direction longitudinale X.

Bien qu'un tel arrangement donne entière satisfaction, il est nécessaire de trouver un arrangement qui permet de gagner de la place en particulier verticalement en réduisant la distance entre le plancher 414 et les membranes 412.

### EXPOSÉ DE L'INVENTION

Un objet de la présente invention est de proposer un ensemble structurel d'un aéronef, en particulier au niveau d'un compartiment pour train d'atterrissage qui présente une hauteur réduite.

À cet effet, est proposé un ensemble structurel pour un aéronef comportant une direction longitudinale et un plan médian, ledit ensemble structurel comportant :
- une pluralité de paires de portiques principaux, où pour une paire, les portiques principaux sont en regard l'un de l'autre par rapport au plan médian et où les paires sont distribuées selon la direction longitudinale,
- deux panneaux transversaux perpendiculaires à la direction longitudinale fixés à l'avant et à l'arrière de la pluralité de paires de portiques principaux pour délimiter ensemble un compartiment pour un train d'atterrissage de l'aéronef,
- au moins une paire de portiques secondaires qui s'étendent parallèlement à la direction longitudinale entre les portiques principaux et dont les extrémités sont fixées aux panneaux transversaux,
- au moins une traverse s'étendant parallèlement aux panneaux transversaux et disposée à cheval sur au moins un portique secondaire, et
- pour chaque portique secondaire et chaque traverse à cheval sur ledit portique secondaire, une bielle montée libre en rotation par une première extrémité à une partie inférieure de la traverse et par une deuxième extrémité à une partie latérale extérieure du portique secondaire. Avec un tel arrangement, l'encombrement vertical de l'ensemble structurel est réduit.

Selon un mode de réalisation particulier, chaque bielle s'étend verticalement entre la traverse et le portique secondaire.

Selon un mode de réalisation particulier, chaque bielle s'étend à partir du portique secondaire en montant vers la traverse et en s'écartant du portique secondaire.

Avantageusement, l'ensemble structurel comporte entre chaque paire de portiques secondaires, au moins une paroi transversale fixée entre les portiques secondaires de la paire, où ladite au moins une paroi transversale est inscrite dans un plan perpendiculaire à la direction longitudinale, pour la ou chaque paroi transversale, au moins une traverse est disposée au-dessus de ladite paroi transversale, et l'ensemble structurel comporte deux bielles additionnelles montées libre en rotation par une première extrémité à une partie inférieure de la ou d'une traverse et par sa deuxième extrémité à une partie latérale supérieure de la paroi transversale.

Avantageusement, chaque bielle additionnelle s'étend verticalement entre la traverse et la paroi transversale.

Avantageusement, pour chaque bielle, la rotation s'effectue autour d'un axe de rotation parallèle à la direction longitudinale.

L'invention propose également un aéronef comportant un train d'atterrissage et un ensemble structurel selon l'une des variantes précédentes, où ledit train d'atterrissage s'escamote dans le compartiment.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un ensemble structurel selon l'invention,
[Fig. 2] est une vue en coupe du fuselage de l'aéronef de la Fig. 1 au niveau d'un compartiment pour train d'atterrissage selon l'invention,
[Fig. 3] est une vue en perspective d'un ensemble structurel selon un mode de réalisation particulier de l'invention, et
[Fig. 4] est une vue en coupe du fuselage d'un aéronef de l'état de la technique au niveau d'un compartiment pour train d'atterrissage.

### EXPOSÉ DÉTAILLÉ DE MODES DE RÉALISATION

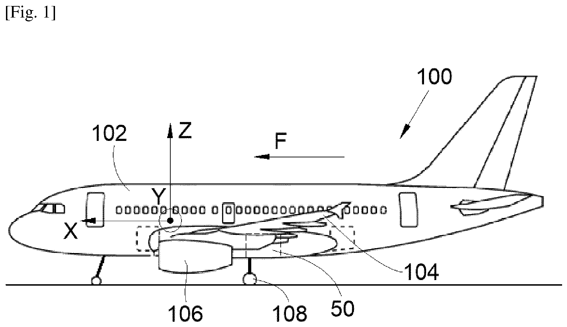

La Fig. 1 montre un aéronef 100 qui présente un fuselage 102 de part et d'autre duquel est fixée une aile 104. Sous chaque aile 104 est fixé au moins un système de propulsion 106.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des systèmes de propulsion 106, cette direction étant représentée schématiquement par la flèche F.

L'aéronef 100 comporte également des trains d'atterrissage, en particulier un train principal 108 qui s'escamote dans un compartiment 50 logé à l'intérieur du fuselage 102. Comme pour l'état de la technique, le compartiment 50 présente une ouverture avec l'extérieur pour permettre le passage du train d'atterrissage 108 et une porte qui se ferme pour obturer l'ouverture lorsque le train d'atterrissage 108 est escamoté.

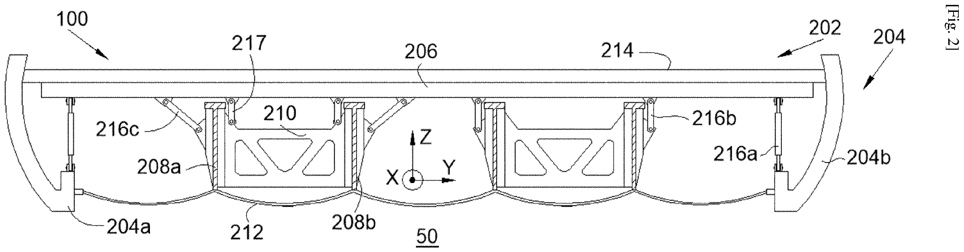

La Fig. 2 est une vue similaire à la Fig. 4 (déjà expliquée) pour un ensemble structurel 202 selon l'invention.

Le compartiment 50 est délimité à l'intérieur du fuselage 102 et présente des parois formant une barrière étanche.

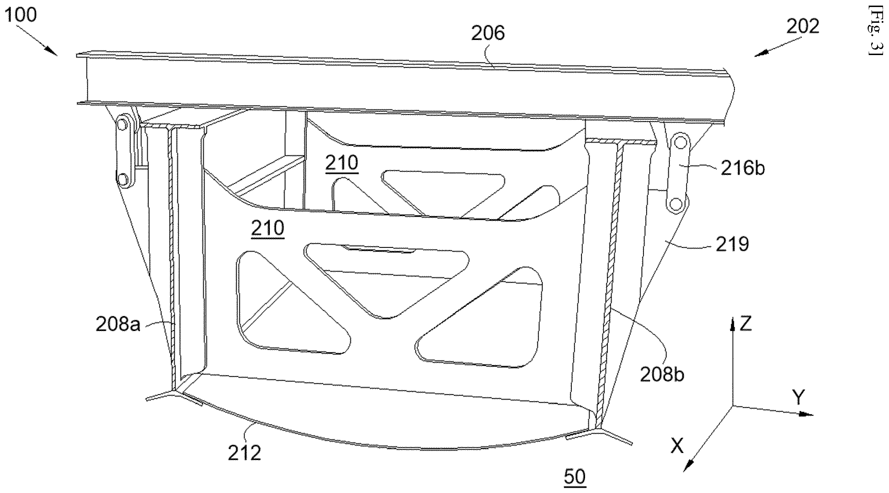

La Fig. 2 montre une coupe de l'aéronef 100 selon l'invention par un plan perpendiculaire à la direction longitudinale X. La Fig. 2 et la Fig. 3 montrent un ensemble structurel 202 avec la même direction longitudinale X et qui comporte une pluralité de portiques principaux 204a-b qui sont distribués et fixés ensemble selon la direction longitudinale X de l'ensemble structurel 202 et de deux panneaux transversaux (non représentés) fixés à l'avant et à l'arrière de la pluralité de portiques principaux 204a-b et qui délimitent ensemble le compartiment 50 pour le train d'atterrissage. Les portiques principaux 204a-b s'intègrent à la structure 204 de l'aéronef 100 sur laquelle la peau se fixe et chaque portique principal 204a-b prend la forme d'un arceau. Les portiques principaux 204a-b sont distribués par paire sur la longueur de l'ensemble structurel 202, et pour une paire, les portiques principaux 204a-b sont en regard l'un de l'autre par rapport à un plan médian XZ de l'aéronef 100.

Les portiques principaux 204a-b sont répartis parallèlement à la direction longitudinale X et les panneaux transversaux sont perpendiculaires à la direction longitudinale X.

L'ensemble structurel 202 comporte également au moins une paire de portiques secondaires 208a-b qui s'étendent parallèlement à la direction longitudinale X entre les portiques principaux 204a-b et qui se fixent par leurs extrémités aux panneaux transversaux.

Entre chaque paire de portiques secondaires 208a-b est fixée une pluralité de parois transversales 210. Les parois transversales 210 sont réparties le long de la direction longitudinale X et chaque paroi transversale 210 est inscrite dans un plan perpendiculaire à la direction longitudinale X. La fixation des parois transversales 210 aux portiques secondaires 208a-b est réalisée par tous moyens appropriés comme par exemple par soudage, vis de serrage, etc.

Selon la largeur de l'aéronef 100, il peut y avoir plusieurs paires de portiques secondaires 208a-b juxtaposées le long de la direction transversale Y et, dans le mode de réalisation de l'invention présenté ici, sur cette même largeur, il y a alors autant de parois transversales 210 que de paires de portiques secondaires 208a-b et les parois transversales 210 sont alignées selon cette même direction transversale Y.

Des membranes 212 sont fixées entre les portiques principaux 204a-b et les panneaux transversaux. Ces membranes 212 constituent le plafond du compartiment 50 et elles forment une barrière étanche entre le compartiment 50 et le reste de l'aéronef 100. Les membranes 212 s'étendent sous les portiques secondaires 208a-b et les parois transversales 210 et elles sont fixées en partie basse des portiques secondaires 208a-b.

Sur la largeur de l'aéronef 100, l'ensemble structurel 202 comporte également une traverse 206 qui s'étend transversalement par rapport à la direction longitudinale X, c'est-à-dire parallèlement aux panneaux transversaux. Il y a une pluralité de traverses 206 réparties le long de la direction longitudinale X.

Dans le mode de réalisation de l'invention représenté sur la Fig. 2, il y a une seule traverse 206 sur la largeur de l'aéronef 100, mais il peut y avoir plusieurs traverses qui sont alignées sur la largeur de l'aéronef 100 comme dans le cas de l'état de la technique.

D'une manière générale, il y a donc au moins une traverse 206 s'étendant parallèlement aux panneaux transversaux et disposée à cheval sur au moins un portique secondaire 208a-b, c'est-à-dire s'étendant de part et d'autre du portique secondaire 208a-b. Lorsqu'il y a une seule traverse 206, cette dernière est à cheval sur tous les portiques secondaires 208a-b.

Sur ces traverses 206 sont fixés un plancher 214 et les rails de fixation des sièges passagers. Le plancher 214 est également fixé aux portiques principaux 204a-b.

Les traverses 206 sont disposées au-dessus des portiques secondaires 208a-b et des portiques principaux 204a-b, et chaque traverse 206 est disposée au-dessus des portiques secondaires 208a-b et des portiques principaux 204a-b.

Chaque traverse 206 est également disposée au-dessus d'au moins une paroi transversale 210 et de plusieurs lorsqu'elles sont alignées selon la direction transversale Y.

Chaque traverse 206 est reliée à chaque portique secondaire 208a-b et aux poutres longitudinales 404a-b par des bielles 216a-c.

L'ensemble structurel 202 comporte ainsi, pour chaque traverse 206, deux bielles d'un premier type 216a, et chaque bielle du premier type 216a assure la liaison entre un des portiques principaux 204a-b et la traverse 206. Chaque bielle du premier type 216a est montée libre en rotation par une première extrémité à une partie inférieure de la traverse 206 et par sa deuxième extrémité à une partie supérieure du portique principal 204a-b. Pour chaque bielle du premier type 216a, la rotation s'effectue autour d'un axe de rotation transversal par rapport à la direction longitudinale X. Ces bielles du premier type 216a reprennent globalement la forme des bielles 416 de l'état de la technique associées aux mêmes éléments. Les bielles du premier type 216a s'étendent verticalement entre la traverse 206 et le portique principal 204a-b.

L'ensemble structurel 202 comporte ainsi, pour chaque traverse 206 et pour chaque portique secondaire 208a-b, une bielle d'un deuxième type 216b ou d'un troisième type 216c qui assure la liaison entre le portique secondaire 208a-b et la traverse 206. Chaque bielle du deuxième type 216b et du troisième type 216c est montée libre en rotation par une première extrémité à une partie inférieure de la traverse 206 et par sa deuxième extrémité à une partie latérale extérieure du portique secondaire 208a-b. Pour chaque bielle du deuxième type 216b et du troisième type 216c, la rotation s'effectue autour d'un axe de rotation parallèle à la direction longitudinale X pour des raisons de facilité de montage. Contrairement aux bielles 416 de l'état de la technique, les bielles du deuxième type 216b et du troisième type 216c sont décalées transversalement et ne sont pas attachées à la partie supérieure des poutrelles longitudinales. Le décalage latéral permet un gain de place en rapprochant les portiques secondaires 208a-b de la traverse 206 et l'encombrement vertical de l'ensemble structurel 202 est ainsi réduit, réduisant par là même, la distance entre le plancher 214 et les membranes 212. La partie latérale extérieure du portique secondaire 208a-b est la partie qui est de l'autre côté du portique secondaire 208a-b par rapport à la paroi transversale 210 qui est entre les portiques secondaires 208a-b. Dans le mode de réalisation de l'invention présenté sur les Fig. 2 et 3, chaque portique secondaire 208a-b présente une extension latérale 219 sur laquelle la bielle du deuxième type 216b ou du troisième type 216c est montée articulée et chaque extension latérale 219 est par exemple une partie ajoutée fixée au portique secondaire 208a-b. D'une manière générale, pour chaque portique secondaire 208a-b et chaque traverse 206 à cheval sur ledit portique secondaire 208a-b, l'ensemble structurel 202 comporte une bielle d'un deuxième type 216b ou d'un troisième type 216c.

Dans un premier mode de réalisation de l'invention, les bielles du deuxième type 216b s'étendent verticalement entre la traverse 206 et le portique secondaire 208a-b.

Dans un deuxième mode de réalisation de l'invention, les bielles du troisième type 216c s'étendent en biais par rapport à la direction verticale Z entre la traverse 206 et le portique secondaire 208a-b. La bielle du troisième type 216c progresse ainsi à partir du portique secondaire 208a-b en montant vers la traverse 206 et en s'écartant du portique secondaire 208a-b.

Dans le deuxième mode de réalisation de l'invention, pour chaque paroi transversale 210 et chaque traverse 206, l'ensemble structurel 202 comporte deux bielles additionnelles 217 qui assurent la liaison entre chaque extrémité de la paroi transversale 210 et la traverse 206. Les deux bielles additionnelles 217 sont donc également décalées latéralement par rapport au portique secondaire 208a-b. Chaque bielle additionnelle 217 est montée libre en rotation par une première extrémité à une partie inférieure de la traverse 206 et par sa deuxième extrémité à une partie latérale supérieure de la paroi transversale 210. Pour chaque bielle additionnelle 217, la rotation s'effectue autour d'un axe de rotation parallèle à la direction longitudinale X. Chaque bielle additionnelle 217 est ainsi de l'autre côté du portique secondaire 208a-b par rapport à la bielle du troisième type 216c.

D'une manière générale, l'ensemble structurel 202 comporte entre chaque paire de portiques secondaires 208a-b, au moins une paroi transversale 210 fixée entre les portiques secondaires 208a-b de la paire, où ladite au moins une paroi transversale 210 est inscrite dans un plan perpendiculaire à la direction longitudinale X. Pour la ou chaque paroi transversale 210, au moins une traverse 206 est disposée au-dessus de ladite paroi transversale 210, et l'ensemble structurel 202 comporte deux bielles additionnelles 217 montées libre en rotation par une première extrémité à une partie inférieure de la ou d'une traverse 206 et par sa deuxième extrémité à une partie latérale supérieure de la paroi transversale 210.

Les bielles additionnelles 217 s'étendent verticalement entre la traverse 206 et la paroi transversale 210.

## Revendications

1. Ensemble structurel (202) pour un aéronef (100) comportant une direction longitudinale (X) et un plan médian (XZ), ledit ensemble structurel (202) comportant :
- une pluralité de paires de portiques principaux (204a-b), où pour une paire, les portiques principaux (204a-b) sont en regard l'un de l'autre par rapport au plan médian (XZ) et où les paires sont distribuées selon la direction longitudinale (X),
- deux panneaux transversaux perpendiculaires à la direction longitudinale (X) fixés à l'avant et à l'arrière de la pluralité de paires de portiques principaux (204a-b) pour délimiter ensemble un compartiment (50) pour un train d'atterrissage de l'aéronef (100),
- au moins une paire de portiques secondaires (208a-b) qui s'étendent parallèlement à la direction longitudinale (X) entre les portiques principaux (204a-b) et dont les extrémités sont fixées aux panneaux transversaux,
- au moins une traverse (206) s'étendant parallèlement aux panneaux transversaux et disposée à cheval sur au moins un portique secondaire (208a-b), **caractérisé en ce que** l'ensemble structurel (202) comporte
- pour chaque portique secondaire (208a-b) et chaque traverse (206) à cheval sur ledit portique secondaire (208a-b), une bielle (216b-c) montée libre en rotation par une première extrémité à une partie inférieure de la traverse (206) et par une deuxième extrémité à une partie latérale extérieure du portique secondaire (208a-b).

2. Ensemble structurel (202) selon la revendication 1, **caractérisé en ce que** chaque bielle (216b) s'étend verticalement entre la traverse (206) et le portique secondaire (208a-b).

3. Ensemble structurel (202) selon la revendication 1, **caractérisé en ce que** chaque bielle (216c) s'étend à partir du portique secondaire (208a-b) en montant vers la traverse (206) et en s'écartant du portique secondaire (208a-b).

4. Ensemble structurel (202) selon la revendication 1, **caractérisé en ce qu'**il comporte entre chaque paire de portiques secondaires (208a-b), au moins une paroi transversale (210) fixée entre les portiques secondaires (208a-b) de la paire, où ladite au moins une paroi transversale (210) est inscrite dans un plan perpendiculaire à la direction longitudinale (X), **en ce que** pour la ou chaque paroi transversale (210), au moins une traverse (206) est disposée au-dessus de ladite paroi transversale (210), et **en ce que** l'ensemble structurel (202) comporte deux bielles additionnelles (217) montées libre en rotation par une première extrémité à une partie inférieure de la ou d'une traverse (206) et par sa deuxième extrémité à une partie latérale supérieure de la paroi transversale (210).

5. Ensemble structurel (202) selon la revendication 4, **caractérisé en ce que** chaque bielle additionnelle (217) s'étend verticalement entre la traverse (206) et la paroi transversale (210).

6. Ensemble structurel (202) selon l'une des revendications 1 à 4, **caractérisé en ce que** pour chaque bielle (216b-c, 217), la rotation s'effectue autour d'un axe de rotation parallèle à la direction longitudinale (X).

7. Aéronef (100) comportant un train d'atterrissage (108) et un ensemble structurel (202) selon l'une des revendications précédentes, où ledit train d'atterrissage (108) s'escamote dans le compartiment (50).

## Patentansprüche

1. Strukturanordnung (202) für ein Flugzeug (100), welches eine Längsrichtung (X) und eine Mittelebene (XZ) aufweist, wobei die Strukturanordnung (202) aufweist:
- mehrere Paare von Hauptportalrahmen (204a-b), wobei für ein Paar die Hauptportalrahmen (204a-b) einander in Bezug auf die Mittelebene (XZ) gegenüberliegen und wobei die Paare entlang der Längsrichtung (X) verteilt sind,
- zwei zur Längsrichtung (X) senkrechte Querplatten, die vorn und hinten an den mehreren Paaren von Hauptportalrahmen (204a-b) befestigt sind, um zusammen einen Schacht (50) für ein Fahrwerk des Flugzeugs (100) zu begrenzen,
- mindestens ein Paar von sekundären Portalrahmen (208ab), welche sich parallel zur Längsrichtung (X) zwischen den Hauptportalrahmen (204a-b) erstrecken und deren Enden an den Querplatten befestigt sind,
- mindestens einen Querträger (206), der sich parallel zu den Querplatten erstreckt und auf mindestens einem sekundären Portalrahmen (208a-b) aufsitzend angeordnet ist,
**dadurch gekennzeichnet, dass** die Strukturanordnung (202) aufweist:
- für jeden sekundären Portalrahmen (208a-b) und jeden Querträger (206), der auf diesem sekundären Portalrahmen (208a-b) aufsitzt, eine Stange (216b-c), die frei drehbar an einem ersten Ende an einem unteren Teil des Querträgers (206) und an einem zweiten Ende an einem äußeren seitlichen Teil des sekundären Portalrahmens (208a-b) angebracht ist.

2. Strukturanordnung (202) nach Anspruch 1, **dadurch gekennzeichnet, dass** sich jede Stange (216b) vertikal zwischen dem Querträger (206) und dem sekundären Portalrahmen (208a-b) erstreckt.

3. Strukturanordnung (202) nach Anspruch 1, **dadurch gekennzeichnet, dass** sich jede Stange (216c) von dem sekundären Portalrahmen (208a-b) aus ansteigend zum Querträger (206) hin und von dem sekundären Portalrahmen (208a-b) weg erstreckt.

4. Strukturanordnung (202) nach Anspruch 1, **dadurch gekennzeichnet, dass** sie zwischen jedem Paar von sekundären Portalrahmen (208a-b) mindestens eine Querwand (210) aufweist, die zwischen den sekundären Portalrahmen (208a-b) des Paares befestigt ist, wobei die mindestens eine Querwand (210) in einer zur Längsrichtung (X) senkrechten Ebene liegt, dadurch, dass für die oder jede Querwand (210) mindestens ein Querträger (206) oberhalb der Querwand (210) angeordnet ist, und dadurch, dass die Strukturanordnung (202) zwei zusätzliche Stangen (217) aufweist, die frei drehbar an einem ersten Ende an einem unteren Teil des oder eines Querträgers (206) und an ihrem zweiten Ende an einem oberen seitlichen Teil der Querwand (210) angeordnet sind.

5. Strukturanordnung (202) nach Anspruch 4, **dadurch gekennzeichnet, dass** sich jede zusätzliche Stange (217) vertikal zwischen dem Querträger (206) und der Querwand (210) erstreckt.

6. Strukturanordnung (202) nach einem der Ansprüche 1 bis 4, **dadurch gekennzeichnet, dass** für jede Stange (216b-c, 217) die Drehung um eine Drehachse erfolgt, die zur Längsrichtung (X) parallel ist.

7. Flugzeug (100), welches ein Fahrwerk (108) und eine Strukturanordnung (202) nach einem der vorhergehenden Ansprüche aufweist, wobei das Fahrwerk (108) in den Schacht (50) eingefahren werden kann.

## Claims

1. Structural assembly (202) for an aircraft (100) having a longitudinal direction (X) and a median plane (XZ), said structural assembly (202) having:
- a plurality of pairs of main gantries (204a-b), wherein, for a pair, the main gantries (204a-b) face one another with respect to the median plane (XZ) and wherein the pairs are distributed in the longitudinal direction (X),
- two transverse panels that are perpendicular to the longitudinal direction (X) and are fixed to the front and the rear of the plurality of pairs of main gantries (204a-b) to together delimit a compartment (50) for a landing gear of the aircraft (100),
- at least one pair of secondary gantries (208a-b) which extend parallel to the longitudinal direction (X) between the main gantries (204a-b) and the ends of which are fixed to the transverse panels,
- at least one crossmember (206) which extends parallel to the transverse panels and is disposed in a manner straddling at least one secondary gantry (208a-b), **characterized in that** the structural assembly (202) has
- for each secondary gantry (208a-b) and each crossmember (206) straddling said secondary gantry (208a-b), a connecting rod (216b-c) mounted so as to be able to freely rotate, via a first end, on a lower part of the crossmember (206) and, via a second end, on an outer lateral part of the secondary gantry (208a-b).

2. Structural assembly (202) according to Claim 1, **characterized in that** each connecting rod (216b) extends vertically between the crossmember (206) and the secondary gantry (208a-b).

3. Structural assembly (202) according to Claim 1, **characterized in that** each connecting rod (216c) extends from the secondary gantry (208a-b), rising towards the crossmember (206) as it moves away from the secondary gantry (208a-b).

4. Structural assembly (202) according to Claim 1, **characterized in that**, between each pair of secondary gantries (208a-b), it has at least one transverse wall (210) fixed between the secondary gantries (208a-b) of the pair, wherein said at least one transverse wall (210) is inscribed in a plane perpendicular to the longitudinal direction (X), **in that**, for the or each transverse wall (210), at least one crossmember (206) is disposed above said transverse wall (210), and **in that** the structural assembly (202) has two additional connecting rods (217) mounted so as to be able to freely rotate, via a first end, on a lower part of the or a crossmember (206) and, via their second end, on an upper lateral part of the transverse wall (210).

5. Structural assembly (202) according to Claim 4, **characterized in that** each additional connecting rod (217) extends vertically between the crossmember (206) and the transverse wall (210).

6. Structural assembly (202) according to one of Claims 1 to 4, **characterized in that**, for each connecting rod (216b-c, 217), the rotation is performed about an axis of rotation parallel to the longitudinal direction (X).

7. Aircraft (100) having a landing gear (108) and a structural assembly (202) according to one of the preceding claims, wherein said landing gear (108) retracts into the compartment (50).
